# EUROPEAN PATENT APPLICATION

(11) **EP 4 818 842 A1**
(43) Date of publication of application: **07.10.2026**
(21) Application number: 26168358.5
(22) Date of filing: 27.03.2026
(51) Int. Cl.: G05D 1/661, G05D 1/242, G05D 1/243, G05D 1/248

(54) **BERTHING ROUTE GENERATION SYSTEM**

(30) Priority: 31.03.2025 JP 2025059118; 25.02.2026 JP 2026028371
(71) Applicant: HONDA MOTOR CO., LTD., Tokyo 105-8404 (JP)
(72) Inventor: NOJIRI, Daisuke, Saitama, 351-0193 (JP); YAMAMOTO, Yosuke, Saitama, 351-0193 (JP)
(74) Representative: Kiwit, Benedikt

(57) **Abstract**

Provided is a berthing route generation system capable of improving berthing accuracy by aligning a bearing before a docking point. The berthing route generation system that generates a route (T) for making a ship (20) dock at a berthing facility (30) generates the route (T) that has a berthing point (PO), which is set near the berthing facility (30) and includes a target position and a target bearing, a start point (P1) at which a berthing operation starts, a midpoint (P2), which includes the target position and the substantially same target bearing as the berthing point (P0), and that connects the start point (P1), the midpoint (P2), and the berthing point (P0). The midpoint (P2) is a position that is offset from the berthing point (P0) at a predetermined distance in a direction substantially parallel to a berthing surface (30a) of the berthing facility (30). The berthing route generation system generates a straight-line path (T1) that linearly connects the berthing point (P0) and the midpoint (P2).

## Description

### BACKGROUND OF THE INVENTION

### Field of the Invention

The present invention relates to a berthing route generation system.

### Description of Related Art

In the related art, as a ship steering device for use in automatic docking of a ship, a ship steering device that, by a controller, sets, among positions along a docking location, a nearest position in a current bow direction as a first target position, determines a position separated from the first target position by an offset amount in a direction perpendicular to an edge of the docking location as a second target position, further controls a propulsion device to make the ship reach the second target position, and then controls the propulsion device to make the ship reach the first target position is known.

### [Patent Documents]

[Patent Document 1] PCT International Publication No. WO2018/100749

### SUMMARY OF THE INVENTION

In the ship steering device of the related art, because control is performed to make a bearing of the ship coincident with a target bearing while bringing the ship close to the first target position, an actual movement locus of the ship may curve off under the influence of, for example, an angular velocity during the automatic docking. For this reason, the ship may not be automatically docked with high accuracy, and in this regard, there is still a problem.

Accordingly, the present invention provides a berthing route generation system capable of improving berthing accuracy by generating a route aligning a bearing before a berthing point.

To solve the above-described problem, a berthing route generation system according to the present invention employs the following configurations.
(1) An aspect 1 of a berthing route generation system according to the present invention is a berthing route generation system that generates a route (T) for making a ship (20) dock at a berthing facility (30), in which the berthing route generation system generates the route (T) that has a berthing point (P0), which is set near the berthing facility (30) and includes a target position and a target bearing, a start point (P1) where a berthing operation starts, a midpoint (P2), which includes the target position and the substantially same target bearing as the berthing point (P0), and that connects the start point (P1), the midpoint (P2), and the berthing point (P0), the midpoint (P2) is a position that is offset from the berthing point (P0) at a predetermined distance in a direction substantially parallel to a berthing surface (30a) of the berthing facility (30), and the berthing route generation system generates a straight-line path (T1) that linearly connects the berthing point (P0) and the midpoint (P2).

With the berthing route generation system of the present invention, the ship is made to automatically navigate in an order of the start point, the midpoint, and the berthing point according to the generated route in berthing the ship. In this case, because the straight-line path that linearly connects the berthing point and the midpoint is set, for example, it is possible to make the ship move in parallel to an extension direction in the berthing surface, for example, in a state in which the berthing surface of the berthing facility and a fore-aft direction of the ship are made to be coincident with each other, to berth the ship at the berthing point. Because the midpoint includes the target position and the same target bearing as the berthing point, it is possible to generate the straight-line path on which the ship can move linearly between the midpoint and the berthing point, with high accuracy. For this reason, it is possible to set the straight-line path having the same bow bearing as the berthing point along the berthing surface of the berthing facility such as a pier. In this way, in the berthing route generation system of the present invention, it is possible to improve berthing accuracy by aligning a bearing before the berthing point.

(2) According to an aspect 2 of the present invention, in the berthing route generation system of the aspect 1, a fore-aft direction of the ship (20) when the ship (20) is berthed at the berthing point (P0) and the berthing surface (30a) may be substantially parallel to each other.

According to this configuration, it is possible to make the ship move in parallel to an extension direction of the berthing surface to berth the ship at the berthing point in a state in which the berthing surface of the berthing facility and the fore-aft direction of the ship are made to be coincident with each other in the straight-line path that linearly connects the berthing point and the midpoint.

(3) According to an aspect 3 of the present invention, in the berthing route generation system of the aspect 1 or of the aspect 2, in a case where a predicted locus of the ship (20) centering on the route (T) interferes with an obstacle, the midpoint (P2) may be reset as a second midpoint (P3) to generate the route (T).

According to this configuration, in a case where the predicted locus interferes with the obstacle and the straight-line path cannot be generated, the midpoint can be reset. Then, it is possible to linearly move the ship in parallel to the berthing surface to berth the ship at the berthing point using a straight-line path linearly connecting the reset second midpoint and the berthing point.

(4) According to an aspect 4 of the present invention, in the berthing route generation system of the aspect 3, the second midpoint (P3) may be set at a position that has the same bearing as the midpoint (P2) and is closer to the berthing point (P0) than the midpoint (P2).

According to this configuration, because it is possible to shorten a linear distance of a straight-line path connecting the second midpoint and the berthing point without changing the bearing of the ship, it is possible to sufficiently secure a straight-line path even at a marina or the like having a narrow space in a direction parallel to the berthing surface. In this case, a straight-line path is generated such that the ship moves from the second midpoint to the berthing point while keeping the bearing.

(5) According to an aspect 5 of the present invention, in the berthing route generation system of the aspect 3 or of the aspect 4, the second midpoint (P3) may be a point that is maintained at a distance from the berthing point (P0) and is offset from the midpoint (P2).

According to this configuration, it is possible to change only the bearing of the ship without changing a distance between the second midpoint and the berthing point with respect to a distance between the midpoint and the berthing point.

(6) According to an aspect 6 of the present invention, in the berthing route generation system of any one of the aspect 3 to the aspect 5, when a predetermined condition is satisfied, display of route generation not being possible may be performed.

According to this configuration, it is possible to allow a user who uses the berthing route generation system, to recognize a condition that route generation is not possible, by confirming the display of route generation not being possible.

(7) According to an aspect 7 of the present invention, in the berthing route generation system of any one of the aspect 1 to the aspect 6, the ship (20) may include an external recognition sensor (41) configured to recognize an external world, a direction in which the berthing surface (30a) of the berthing facility (30) extends may be recognized on the basis of a detection result of the external recognition sensor (41), and a direction substantially parallel to the berthing surface (30a) may be determined on the basis of a recognition result of the extension direction of the berthing surface (30a).

According to this configuration, it is possible to detect the extension direction of the berthing surface with high accuracy using the external recognition sensor, to determine the direction parallel to the berthing surface, and to generate a more accurate straight-line path.

(8) According to an aspect 8 of the present invention, in the berthing route generation system of any one of the aspect 1 to the aspect 7, an input of a user regarding a berthing direction may be received from an input device (50), and the midpoint (P2) may be set on the basis of the input berthing direction.

According to this configuration, more detailed information regarding the berthing direction of the berthing facility is input and accepted from the input device, making it possible to set the berthing point with higher accuracy, and to set a midpoint for generating a straight-line path with the berthing point.

(9) According to an aspect 9 of the present invention, in the berthing route generation system of any one of the aspect 1 to the aspect 8, berthing direction may start when a predetermined condition is satisfied in berthing control and a station-keeping point may be set as a start point.

According to this configuration, for example, in a case where a candidate of the berthing facility is found in the vicinity of a point registered in advance, it is possible to start the berthing direction, and to set the station-keeping point as the start point.

(10) According to an aspect 10 of the present invention, in the berthing route generation system of the aspect 7, or of the aspect 8 or 9 in combination with the aspect 7, the berthing facility (30) may be detected using the external recognition sensor (41) to set the berthing point (P0) and may be determined as a candidate berth when the route (T) that connects the berthing point (P0), the midpoint (P2), and the start point (P1) is able to be generated, and the candidate berth may be displayed.

According to this configuration, it is possible to reduce a problem that route generation is not possible after candidate selection, by searching for a candidate with the same logic as berthing route generation in proposing a candidate berth of the berthing facility.

The berthing route generation system according to the present invention can improve berthing accuracy by generating a route for aligning a bearing before a berthing point.

### BRIEF DESCRIPTION OF THE DRAWINGS

FIG. 1 is a schematic view showing movement of a ship in automatically berthing the ship using a berthing route generation system in an embodiment of the present invention.
FIG. 2 is a schematic view showing movement of the ship from a start point to a berthing point shown in FIG. 1.
FIG. 3 is a plan view showing a state in which the ship is berthed at the berthing point shown in FIG. 1.
FIG. 4 is a side view of a propulsion machine according to the embodiment.
FIG. 5 is a diagram showing obstacle map information using a LiDAR and a determination area of obstacle interference.
FIG. 6 is a block diagram showing a configuration of the berthing route generation system.
FIG. 7 is a plan view showing disposition of a sensor system on the ship.
FIG. 8 is a flowchart illustrating processing of searching for a berthing facility.
FIG. 9 is a flowchart illustrating route generation processing.
FIG. 10 is a flowchart illustrating processing of a subroutine of resetting a midpoint in a route generation flow shown in FIG. 9.
FIG. 11 is a schematic view showing movement of a ship in automatically berthing the ship using the berthing route generation system taking into consideration a wind direction.
FIG. 12 is a flowchart illustrating route generation processing shown in FIG. 11.

### DETAILED DESCRIPTION OF THE INVENTION

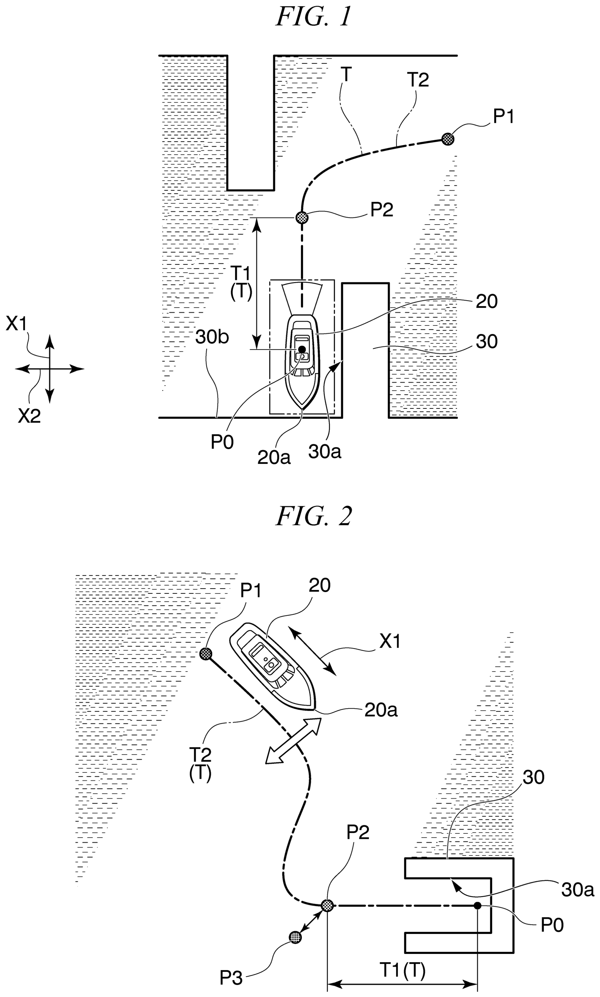

As shown in FIGS. 1 to 3, a berthing route generation system 1 is used in a state of being mounted in a ship 20. The berthing route generation system 1 is a system that generates a route for berthing the ship 20 at a berthing facility 30 and causes the ship 20 to automatically navigate during berthing.

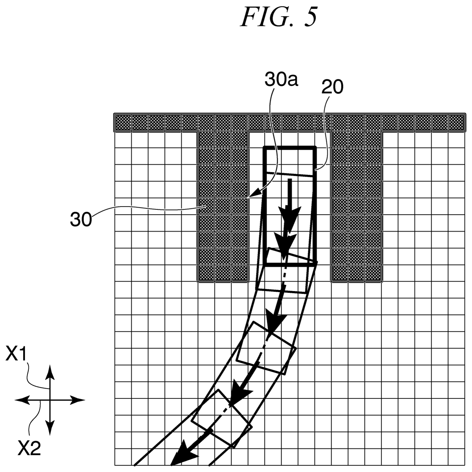

Here, the berthing facility 30 includes a facility for anchoring a ship such as a pier and a floating pier having a berthing surface 30a at which the ship 20 can be berthed, a trailer, or an elevation lift. In the present embodiment, the berthing facility 30 is a pier that extends in a direction away from a rock wall 30b, and one side surface extending in the extension direction becomes the berthing surface 30a (see FIG. 5).

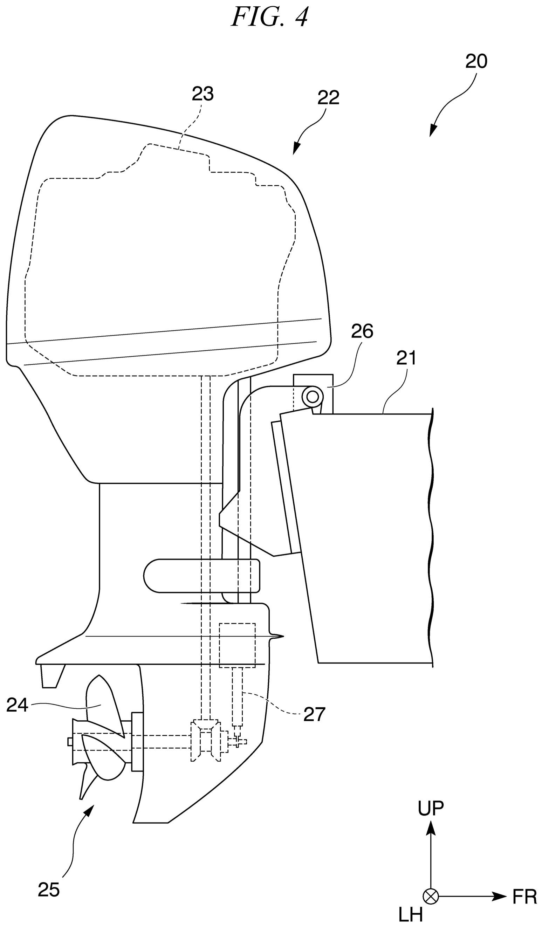

FIG. 4 shows a side view of a propulsion machine.

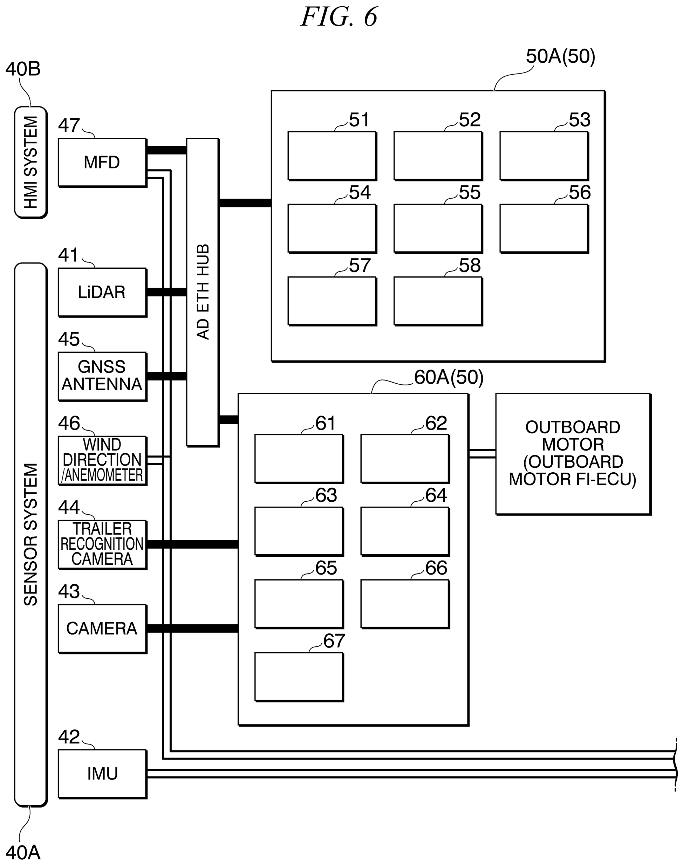

Examples of the ship 20 in which the berthing route generation system 1 is mounted include a pleasure boat (including a pontoon, a V-hull boat (V-shaped bottom boat), and a sports fishing boat), a fishing boat, a water jet ship, an electrically power-propelled ship, and a hybrid ship, and are not particularly limited. Further, the ship 20 may be a runabout or a personal watercraft. As shown in FIG. 4, the ship 20 includes a known propulsion machine 22 that gives thrust to a hull 21. The propulsion machine 22 includes a propeller 24 that is given driving power from a driving source such as an engine 23 or an electric motor, and a propulsion device 25 such as a screw. The propulsion machine 22 is disposed on a stern side of the ship 20. As the propulsion machine 22, an outboard motor, an inboard/outboard motor, an inboard motor, a rim drive, a POD, or the like can be employed. In the present embodiment, the ship 20 includes a plurality of outboard motors. A target value of an operation amount calculated by a ship steering control unit 50 is sent to a known FI-ECU of the outboard motor and a controller of a turning device 26 that turns the outboard motor with respect to the hull 21, via an integrated control unit (see FIG. 6). The FI-ECU and the controller control an actuator for driving a throttle valve 27 provided in the outboard motor or the actuator of the turning device 26 on the basis of the received target value of the operation amount.

Here, in the ship 20, a direction from a bow 20a toward a stern is described as a fore-aft direction X1, and a direction perpendicular to the fore-aft direction X1 in a plan view is described as a right-left direction X2.

As shown in FIG. 6, the berthing route generation system 1 has a sensor system 40A, an HMI system 40B (human-machine interface system), and a ship steering control unit 50 (input device). The ship steering control unit 50 controls the sensor system 40A, the HMI system 40B, the input device 50, and the propulsion device to generate a berthing route for causing the ship 20 to automatically navigate during berthing. The HMI system 40B has a multi-function display (MFD) 47.

The ship steering control unit 50 includes a first control unit 50A and a second control unit 60A. The first control unit 50A has a space recognition unit 51 for recognizing an empty space, a self-position recognition unit 52 for recognizing a self-position, an image processing unit 53 that processes an image acquired by cameras 43 or the like, an obstacle recognition unit 54 that recognizes an obstacle, a hull behavior model generation unit 55, a state management unit 56, a route generation unit 57 that performs route generation, and a following control unit 58 for following a generated route. The second control unit 60A has a berthing facility (berth) recognition unit 61, a trailer recognition unit 62, a short distance measurement unit 63, an obstacle detection unit 64, a server 65, a UI display unit 66, and an IVI function unit 67.

The ship steering control unit 50 is a one-piece or multi-piece electronic control device provided in the ship 20. The ship steering control unit 50 includes a circuit, and is configured as a computer including a CPU, a ROM, and a RAM. In the ROM, a program for operating the ship steering control unit 50 is stored. The ship steering control unit 50 (50A, 60A) can be caused to function as each unit of the ship steering control unit 50 by cooperation of the above-described hardware and software.

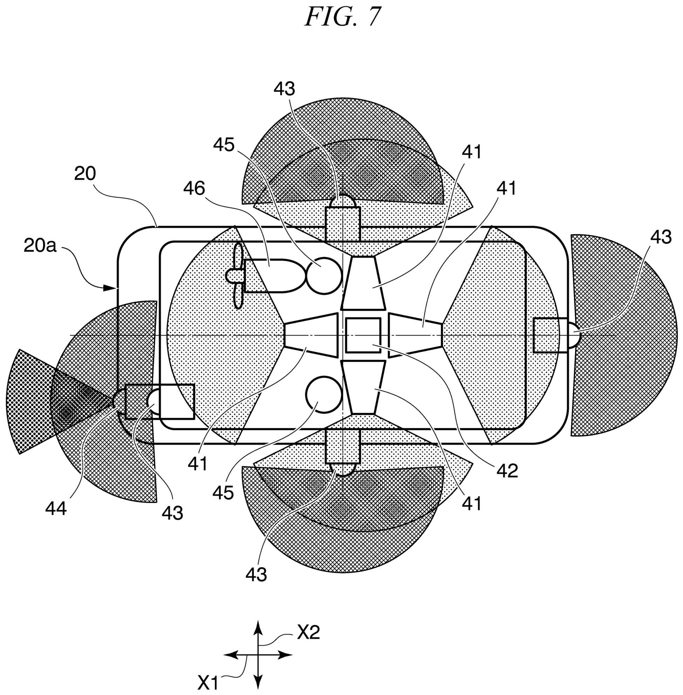

As shown in FIGS. 6 and 7, the sensor system 40A includes LiDARs 41 (external recognition sensor), an IMU 42, cameras 43, a trailer recognition camera 44, GNSS antennas 45, and an anemometer 46.

The LiDARs 41 are sensors that measure a distance to a surrounding object and recognize an external world. That is, the LiDARs 41 detect the presence or absence of an object in surroundings with reflected light by emitting pulsed light. When there is an object, the LiDARs 41 detect a bearing and a distance of the object on the basis of a direction of pulsed light when reflected light is received and a time until light reception. The LiDARs 41 acquire point cloud data representing the object in surroundings on the basis of the detection result. The LiDARs 41 are disposed uniformly on the full circumference 360°. In FIG. 6, the LiDARs 41 are disposed at four places (respective places on front, back, right, and left sides) at intervals of 90° in a circumferential direction.

The IMU 42 is a sensor that detects movement of the hull. The IMU 42 is disposed near the four LiDARs 41. In FIG. 6, the four LiDARs 41 are disposed around the IMU 42.

The cameras 43 are cameras that capture a video of surroundings of the hull. The cameras 43 also have a function of displaying the captured video or identifying a video and measuring a distance to a close object. The cameras 43 are disposed on the front, back, right, and left sides of the ship 20 in FIG. 6, respectively.

The trailer recognition camera 44 detects a trailer tab provided in a trailer. The trailer recognition camera 44 is disposed on the front side of the ship 20 as shown in FIG. 6. A known AprilTag may be used as the trailer tab, and a relative positional relationship with respect to the trailer can be recognized by recognizing the trailer tab with the trailer recognition camera 44. In the present embodiment, while the trailer recognition camera 44 and the cameras 43 are provided separately, the trailer tab may be recognized using the cameras 43.

The GNSS antennas 45 detect a position and a direction of the ship 20. The GNSS antennas 45 receive GNSS radio waves from satellites and acquire a current absolute position (latitude and longitude) of the ship 20 by performing known positioning calculation. GNSS positioning may be single positioning; however, when known DGNSS positioning or real time kinematic (RTK) positioning is used, it is preferable in that the position of the ship 20 can be acquired with high accuracy. The GNSS antennas 45 are attached to an upper portion of the ship 20 in a state in which there is no object that interferes therewith. The sensor system 40A is provided with a bearing sensor (not shown) in addition to the GNSS antennas 45. At the same time that the absolute position of the ship 20 is measured using the GNSS antennas 45, a ship speed (speed over ground) V is calculated on the basis of a time-series positioning result. The bearing sensor acquires a direction of the bow of the ship 20. The bearing sensor can be, for example, a magnetic bearing sensor or Satellite Compass.

The anemometer 46 is a sensor that detects a direction and a force of wind. The anemometer 46 is attached to the ship 20 to receive wind from the front.

To the ship steering control unit 50, surrounding external recognition data acquired by the LiDARs 41, position data of the ship 20 acquired by the GNSS antennas 45, and bearing data of the ship 20 acquired by the bearing sensor are input.

The berthing facility (berth) recognition unit 61 creates a map of obstacles surrounding the ship 20 on the basis of point cloud information acquired by the LiDARs 41 or posture information of the ship 20 acquired by the IMU 42. That is, obstacle map information is created. With this, it is possible to search for a space greater than the ship 20 at a berthing point. Further, after the berthing facility 30 is recognized by the cameras 43, it is possible to recognize a berth by extracting an empty space close to the berthing facility 30.

The berthing route generation system 1 generates a straight-line path T1 that linearly connects a berthing point P0 and a midpoint P2 offset at a predetermined distance from the berthing point P0, and generates a route T2 that connects the midpoint P2 and a start point P1 where a berthing operation starts, thereby generating a route T that connects the start point P1 and the berthing point P0.

The berthing route generation system 1 generates the straight-line path T1 such that the fore-aft direction X1 of the ship 20 when the ship 20 is berthed at the berthing point P0 and the berthing surface 30a are substantially parallel to each other. The route T2 may be a straight-line path or may be a composite route including a straight line and a curve. The start point P1 may be a current position of the ship or the user may set any position as the start point P1.

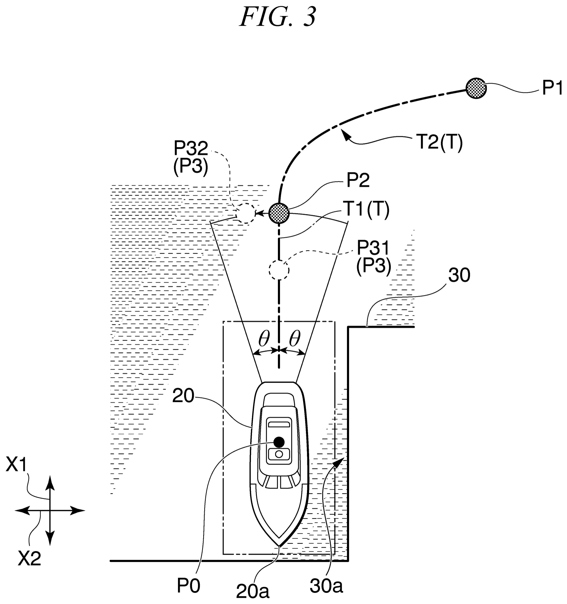

Here, "substantially parallel" refers to a range in which, when the fore-aft direction X1 of the ship 20 is parallel to the extension direction of the berthing surface 30a, an angle θ with respect to the fore-aft direction X1 in the bearing (direction) of the ship 20 is within ±30° as shown in FIG. 3.

The control of route generation by the berthing route generation system 1 and the movement of the ship 20 based on the generated route T may be performed completely automatically or may be performed through assistance to determine the route T and guide a throttle lever or steering wheel operation to follow the route T.

The berthing point P0 is set near the berthing facility 30 and includes a target position and a target bearing. The midpoint P2 includes the target position and the substantially same target bearing as the berthing point P0. The midpoint P2 is a position that is offset from the berthing point P0 at a predetermined distance in a direction substantially parallel to the berthing surface 30a of the berthing facility 30. The midpoint P2 is a switching point of the route T2 from the start point P1 and the straight-line path T1. At the midpoint P2, the straight-line path T1 having the same bow bearing as the berthing point P0 is set.

In addition, as the setting of the berthing point P0, a berthing point can also be set by registering GPS information (when there are two pieces, the bow bearing can be confirmed) of a berthing facility where the ship anchors once or a berthing direction. Information on determination of a candidate berth pier (berth candidate) in this case, the berthing direction, and the like can be registered in the ship steering control unit 50 by an input of the user using the MFD 47 or a tablet, a button operation of positions of a post and a starboard, or an input of the user regarding matching (synchronization) of an obstacle map and a registered point, and a GPS registered point and a close point in the result of external recognition.

Here, a target position of berthing is a position targeted by the ship 20 that automatically navigate. The target bearing is a bearing targeted by the ship 20 that automatically navigates. A target includes not only a final target (berthing point P0) but also an intermediate target (midpoint P2) before the final target.

The berthing route generation system 1 recognizes a direction in which the berthing surface 30a of the berthing facility 30 extends, on the basis of a detection result of the LiDARs 41, and determines a direction substantially parallel to the berthing facility 30 on the basis of a recognition result of the extension direction in the berthing surface 30a. That is, in the berthing route generation system 1, the berthing facility 30 is detected using the LiDARs 41 to set the berthing point P0 and is determined as a candidate berth when the route T that connects the berthing point P0, the midpoint P2, and the start point P1 can be generated, and displays the candidate berth on the MFD 47.

In the ship steering control unit 50, when a predetermined condition is satisfied in berthing control, berthing direction starts, and a station-keeping point is set as the start point P1. In the present embodiment, the user selects a candidate berth displayed on the MFD 47, thereby starting the berthing direction.

An input of a driver regarding a berthing direction is received from the ship steering control unit 50, and the midpoint P2 is set on the basis of the input berthing direction.

The ship steering control unit 50 determines a position to be a candidate of the berthing point P0 where the ship 20 will be berthed, from the obstacle map information. In this case, in the berthing facility (berth) recognition unit 61, a straight line along a point cloud is detected using an appropriate computational algorithm. The straight line represents the extension direction of the berthing surface 30a of the berthing facility 30. Then, the driver who works the ship 20 can set a targeted point (that is, the berthing point P0) where the ship 20 will be actually automatically berthed, at a position near the straight line (berthing surface 30a) detected by the berthing facility (berth) recognition unit 61. The driver sets the berthing point P0 near the berthing surface 30a of the berthing facility 30 where the ship 20 can be berthed, taking into consideration the total length of the ship 20. In this case, as described above, the berthing point P0 is set such that the set extension direction of the berthing surface 30a and the fore-aft direction X1 of the ship 20 are substantially parallel to each other. The present invention is not limited to a case where driver causes the ship to enter the berthing point P0 from the bow side and berths the ship, and the driver may select entering from the stern side.

FIG. 5 will be referred to. FIG. 5 is an example of an obstacle map (grid map) in which an occupied region (black square of FIG. 5) occupied by an object and an unoccupied region (white square of FIG. 5) not occupied by an object are shown. The obstacle map is generated using point cloud information acquired by the LiDARs 41. When an occupancy of the point cloud information is equal to or greater than a predetermined value for each grid having a predetermined size (for example, 50 cm square or 1 m square), a corresponding region may be referred to as an occupied region, and when the occupancy of the point cloud information is equal to or smaller than the predetermined value, a corresponding region may be referred to as an unoccupied region.

As shown in FIG. 3, in the berthing route generation system 1, in a case where a predicted locus of the ship 20 having a predetermined width W1 centering on the route T interferes with an obstacle, the midpoint P2 (also referred to as a first midpoint) is reset as a second midpoint P3 and the route T2 is generated. For example, a second midpoint P3 (P31) is set at a position that has the same bearing as the first midpoint P2 and is closer to the berthing point P0 than the first midpoint P2. A second midpoint P3 (P32) may be set at a point that is maintained at a distance from the berthing point P0 and is offset from the first midpoint P2. In resetting the second midpoint P3 (P31 or P32), in the obstacle detection unit 64 of the ship steering control unit 50, when a predetermined condition that the predicted locus (the route T initially generated) described above interferes with an obstacle is satisfied, display of route generation not being possible is performed. The condition for resetting the second midpoint P3 is not limited to the interference with the obstacle as described above, and, for example, the second midpoint P3 may be set according to a condition for an evaluation criterion of a route, such as a case where another ship is likely to interfere with the route of the host ship from a movement locus of another ship. In regard to the predetermined width W1, at least any length greater than a width of the ship 20 is stored in the ship steering control unit 50 in advance. It is preferable that the predetermined width W1 is greater than a length of the hull in the fore-aft direction.

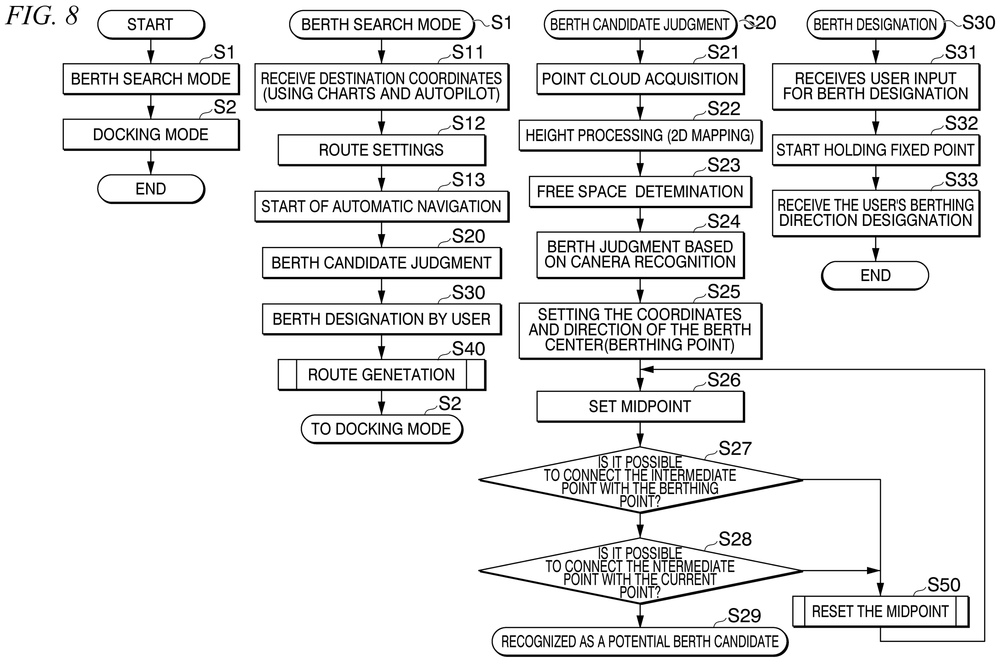

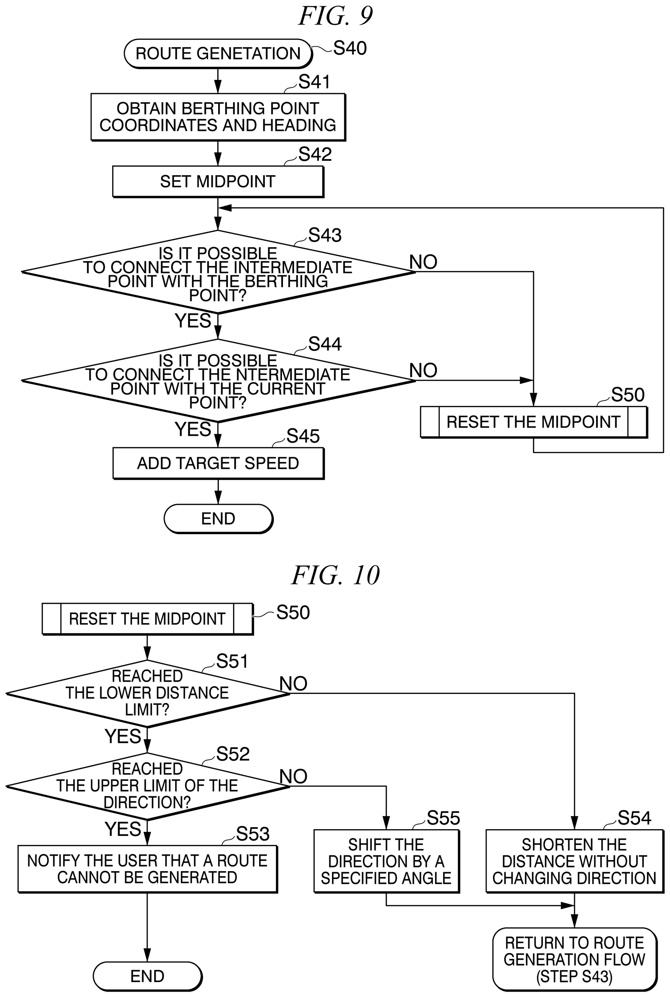

Next, an example of a processing flow by the berthing route generation system 1 will be described in detail. FIG. 8 is a flowchart illustrating processing of searching for the berthing facility 30 (berth). FIG. 9 is a flowchart illustrating processing of route generation. FIG. 10 is a flowchart illustrating processing of a subroutine of resetting a midpoint in a route generation flow shown in FIG. 9.

As shown in FIG. 8, when the processing by the berthing route generation system 1 is started, in Step S1, a processing flow of a berth search mode is started, and in Step S2, when a berthing mode is executed, the flow is finished.

As the berth search mode in Step S1, in Step S11, coordinates of a destination are received. This is performed using a marine chart or an autopilot in the ship steering control unit 50 including the input device. Next, in Step S12, a route (route T0) is set, and in Step S13, automatic navigation is started. Next, the process proceeds to Step S20, and a candidate of a berth (berthing facility 30) is determined.

In the berth candidate determination of Step S20, first, in Step S21, a point cloud surrounding the ship 20 is acquired by the LiDARs 41, and height processing of a target position is performed through 2D mapping by two-dimensional processing (Step S22). In this way, the obstacle map (grid map) in which an occupied region (black square of FIG. 5) occupied by an object and an unoccupied region (white square of FIG. 5) not occupied by an object are shown is generated. In addition, in Step S23, determination of an empty space is performed. In Step S23, an area of an unoccupied region is determined from the grip map generated in Step S22. An unoccupied region having a width equal to or greater than a first threshold and a length equal to or greater than a second threshold, that is, an empty space, is extracted along a region (black square of FIG. 5) occupied by an object. Next, in Step S24, determination of a berth is performed in using the cameras 43 in conjunction with image recognition of the cameras 43. In a case where an object near the empty space extracted in Step S23 is a berthing facility, the empty space is determined as a berth. Next, coordinates and a bearing of a center (berthing point P0) of the berth are set (Step S25), and in Step S26, the midpoint P2 is set.

Next, in Step S27, determination is performed whether the midpoint P2 and the berthing point P0 can be connected. In Step S27, in a case where the midpoint P2 and the berthing point P0 can be connected (Step S27: YES), the process proceeds to Step S28. On the other hand, in Step S27, in a case where the midpoint P2 and the berthing point P0 cannot be connected (Step S27: NO), the process proceeds resetting processing of the midpoint P2 of Step S50. Step S50 will be described below.

In Step S28, determination is performed whether the midpoint P2 and a current place can be connected. In Step S28, in a case where the midpoint P2 and the current place can be connected (Step S28: YES), the process proceeds processing of Step S29, and the berth is recognized as a berth candidate. On the other hand, in Step S28, in a case where the midpoint P2 and the current place cannot be connected (Step S28: NO), the process proceeds to the resetting processing of the midpoint P2 of Step S50.

In an operation flow of the berth candidate determination of Step S20, in Step S29, the berth candidate is recognized. The operation flow of the berth candidate determination of Step S20 is constantly continuously executed in the berth search mode S1. That is, actually, the berth candidate determination is continuously executed in Step S20 until the user designates a berth in Step S30. Then, the berth candidate is not limited to one, and when the berth candidate determination of S20 to S29 is satisfied, two or more berth candidates may be displayed on the MFD 47.

In an operation flow of berth designation of Step S30, first, in Step S31, a berth designation input of the user is received, and in Step S32, fixed-point holding is started. Thereafter, berthing direction designation of the user is received (Step S33), and the operation flow of the berth designation in Step S30 is finished.

In an operation flow of route generation of Step S40, the route T is generated. As shown in FIG. 9, first, in Step S41, coordinates of the berthing point P0 and a bow bearing are acquired. Thereafter, in Step S42, the midpoint P2 is set.

Next, in Step S43, determination is performed whether the midpoint P2 and the berthing point P0 can be connected. In Step S43, in a case where the midpoint P2 and the berthing point P0 can be connected (Step S43: YES), the process proceeds to processing of Step S44. On the other hand, in Step S43, in a case where the midpoint P2 and the berthing point P0 cannot be connected (Step S43: NO), the process proceeds to the resetting processing of the midpoint P2 of Step S50. Step S50 will be described below.

In Step S44, determination is performed whether the midpoint P2 and the current place can be connected. In Step S44, in a case where the midpoint P2 and the current place can be connected (Step S44: YES), the process proceeds to processing of Step S45, and a target speed of the ship 20 is added. Here, as processing of adding the target speed, for example, the target speed is set to be the same from the current place to the midpoint P2 and gradually reduced from the midpoint P2 to the berthing point P0. On the other hand, in Step S44, in a case where the midpoint P2 and the current place cannot be connected (Step S44: NO), the process proceeds to the resetting processing of the midpoint P2 of Step S50.

Next, as shown in FIG. 10, in an operation flow shown as the subroutine of resetting the midpoint P2 in Step S50, first, in Step S51, determination is performed whether a distance from the berthing point P0 reaches a lower limit value set in advance. When the distance from the berthing point P0 in this case reaches the lower limit value (Step S51: YES), the process proceeds to Step S52. On the other hand, when the distance from the berthing point P0 does not reach the lower limit value (Step S51: NO), the process proceeds to Step S54. In Step S54, processing of shortening the distance from the berthing point P0 without changing the bearing of the ship 20 is performed, and the process returns to Step S43 of the operation flow of the route generation shown in FIG. 9.

In Step S52, determination is performed whether the bearing of the ship 20 reaches an upper limit value set in advance. In a case where the bearing of the ship 20 in this case reaches the upper limit value (Step S52: YES), the process proceeds to Step S53. On the other hand, in a case where the bearing of the ship 20 does not reach the upper limit value (Step S52: NO), the process proceeds to Step S55. In Step S55, processing of shifting the bearing of the ship 20 at a predetermined angle θ is performed, and the process returns to Step S43 of the operation flow of the route generation shown in FIG. 9.

Next, in Step S53, when the distance from the berthing point P0 reaches the lower limit value in Step S51 (Step S51: YES), and when the bearing of the ship 20 reaches the upper limit value in Step S52 (Step S52: YES), processing of notifying the user of "route generation not being possible" is performed.

Specifically, for example, a distance is gradually reduced from the midpoint P2 set separated by 10 m from the berthing point P0, and for example, in a case where a route cannot be generated even when the distance is reduced to 5 m, and in addition, in a case where the upper limit of the bearing of the ship 20 is not reached, the angle θ from the original bearing is changed. Then, in a case where a route cannot be generated even by an offset of 30° right and left, determination is made that route generation is not possible, and the process returns to the operation flow of the route generation again.

The operation flow of the route generation of Step S40 is finished when the target speed of the ship 20 is added in Step S45. Then, when the operation flow of the route generation of Step S40 is finished, the process proceeds to the berthing mode of Step S2. In the berthing mode of Step S2, any ship steering control is performed such that the ship follows the route set in the operation flow of the route generation of Step S40.

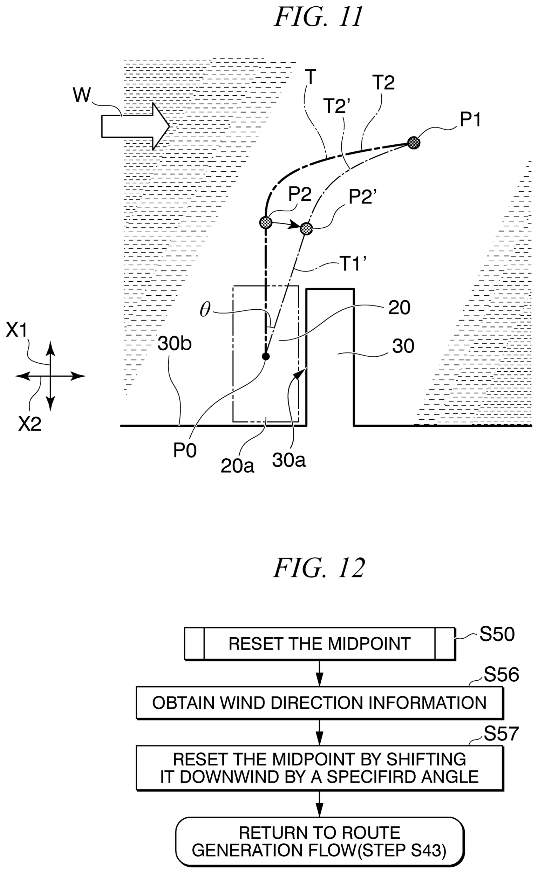

Next, an operation flow of route generation with respect to a wind direction will be described with reference to FIGS. 11 and 12. FIG. 11 is a schematic view showing movement of a ship in automatically berthing the ship using the berthing route generation system taking into consideration a wind direction. FIG. 12 is a flowchart illustrating route generation processing shown in FIG. 11.

As shown in FIG. 11, in a case where a wind direction is taken into consideration in generating the route T for automatically berthing the ship 20 at the berthing facility 30, the first midpoint P2 is reset at a position shifted to a leeward midpoint P2' (first midpoint or midpoint) on the leeward. Here, an arrow W of FIG. 11 indicates a wind direction, and in the present embodiment, the wind direction is a direction perpendicular to the berthing surface 30a.

In this way, in the berthing route generation system 1, in a case where the wind direction is taken into consideration, a route T2' that connects the start point P1, the leeward midpoint P2', and the berthing point P0 is generated. The reset leeward midpoint P2'is a position that is offset from the berthing point P0 at a predetermined distance in a direction substantially parallel to the berthing surface 30a of the berthing facility 30. Then, in the processing of the berthing route generation system 1, a route T1' that connects the berthing point P0 and the leeward midpoint P2' is generated. In the case of the route generation taking into consideration the wind direction, the ship 20 that moves to the leeward midpoint P2' is directed such that the bow 20a is directed to the windward, and the stern is directed to the leeward. For this reason, in the reset route T' from the leeward midpoint P2' to the berthing point P0, the ship 20 moves toward the berthing point P0 while receiving an unfavorable wind.

As shown in FIG. 12, in the above-described berthing route generation system 1, the operation flow taking into consideration the wind direction is shown as the subroutine of resetting the midpoint P2 (here, the leeward midpoint P2') in Step S50 shown in FIG. 9. Specifically, in the operation flow shown in FIG. 12, first, in Step S56, wind direction information is acquired in the ship 20 that is navigating, and the process proceeds to Step S57. For the wind direction information, the anemometer 46 that is mounted in the ship steering control unit 50 shown in FIG. 6 is used. Next, in Step S57, processing of resetting the leeward midpoint P2' shifted to the leeward at the predetermined angle θ (see FIG. 11) is performed, and then, the process returns to Step S43 of the operation flow of the route generation shown in FIG. 9.

In this way, in the berthing route generation system 1, the processing taking into consideration the wind direction is performed, and the leeward midpoint P2' is shifted to the leeward with respect to the midpoint P2 set at the beginning, thereby moving the ship to the berthing point P0 against an unfavorable wind (countersteering). That is, it is possible to set a route along which the ship 20 can move while suppressing a following wind difficult to be controlled.

As described above, the berthing route generation system 1 in the above-described embodiment generates the route T for berthing the ship 20 at the berthing facility 30. The berthing route generation system 1 generates the route T that has the berthing point P0, which is set near the berthing facility 30 and includes the target position and the target bearing, the start point P1 where the berthing operation starts, and the midpoint P2, which includes the target position and the substantially same target bearing as the berthing point P0, and connects the start point P1, the midpoint P2, and the berthing point P0. The midpoint P2 is the position that is offset from the berthing point P0 at the predetermined distance in the direction substantially parallel to the berthing surface 30a of the berthing facility 30. The straight-line path T1 that linearly connects the berthing point P0 and the midpoint P2 is generated.

With the berthing route generation system 1 according to the present embodiment, in berthing the ship 20, the ship 20 is caused to automatically navigate in an order of the start point P1, the midpoint P2, and the berthing point P0 according to the generated route T. In this case, because the straight-line path T that connects the berthing point P0 and the midpoint P2 is set, for example, in a case where the berthing surface 30a of the berthing facility 30 and the fore-aft direction X1 of the ship 20 are made coincident with each other, the ship 20 can be moved in parallel to the extension direction of the berthing surface 30a and berthed at the berthing point P0. Because the midpoint P2 includes the target position and the same target bearing as the berthing point P0, the straight-line path T1 along which the ship 20 can move linearly between the midpoint P2 and the berthing point P0 can be generated with high accuracy. For this reason, the straight-line path T1 having the same bow bearing as the berthing point P0 can be set along the berthing surface 30a of the berthing facility 30 such as a pier. In this way, in the berthing route generation system 1 of the present embodiment, it is possible to improve berthing accuracy by aligning a bearing before the berthing point P0.

In the above-described berthing route generation system 1, the fore-aft direction of the ship 20 when the ship 20 is berthed at the berthing point P0 and the berthing surface 30a are substantially parallel to each other.

According to this configuration, in the straight-line path T1 that linearly connects the berthing point P0 and the midpoint P2, in a case where the berthing surface 30a of the berthing facility 30 and the fore-aft direction X1 of the ship 20 are made coincident with each other, the ship 20 can be moved in parallel to the extension direction of the berthing surface 30a and berthed at the berthing point P0.

In the above-described berthing route generation system 1, in a case where the predicted route of the ship 20 centering on the route T interferes with an obstacle, the midpoint P2 is reset as the second midpoint P3 and the route T is generated.

According to this configuration, in a case where the predicted route interferes with an obstacle and the straight-line path T1 cannot be generated, the midpoint P3 can be reset. Then, the ship 20 can be linearly moved in parallel to the berthing surface 30a using the straight-line path T1 that linearly connects the reset second midpoint P3 and the berthing point P0 and berthed at the berthing point P0.

In the above-described berthing route generation system 1, the second midpoint P3 is set at a position having the same bearing as the first midpoint P2 and closer to the berthing point P0 than the first midpoint P2.

According to this configuration, it is possible to shorten a linear distance of the straight-line path T1 that connects the second midpoint P3 and the berthing point P0, without changing the bearing the ship 20, and to sufficiently secure the straight-line path T1 even at a marina or the like having a narrow space in a direction parallel to the berthing surface 30a. In this case, the straight-line path is generated such that the ship 20 moves from the second midpoint P3 to the berthing point P0 while keeping the bearing.

In the above-described berthing route generation system 1, the second midpoint P3 is a point that is maintained at a distance from the berthing point P0 and is offset from the first midpoint P2.

According to this configuration, it is possible to change only the bearing of the ship 20 without changing the distance between the second midpoint P3 and the berthing point P0 with respect to the distance between the first midpoint P2 and the berthing point P0.

In the above-described berthing route generation system 1, when a predetermined condition is satisfied, display of route generation not being possible is performed.

According to this configuration, it is possible to allow a user who uses the berthing route generation system 1, to recognize a condition that route generation is not possible, by confirming the display of route generation not being possible.

In the above-described berthing route generation system 1, the ship 20 includes the external recognition sensor (LiDARs 41) that recognizes the external world. The direction in which the berthing surface 30a of the berthing facility 30 extends is recognized on the basis of the detection result of the LiDARs 41, and the direction substantially parallel to the berthing surface 30a is determined on the basis of the recognition result of the extension direction in the berthing surface 30a.

According to this configuration, it is possible to detect the extension direction of the berthing surface 30a with high accuracy using the LiDARs 41, to determine the direction parallel to the berthing surface 30a, and to generate the more accurate straight-line path T1.

The berthing route generation system 1 of the above-described embodiment receives the input of the user regarding the berthing direction from the input device 50, and sets the midpoint P2 on the basis of the input berthing direction.

According to this configuration, more detailed information regarding the berthing direction of the berthing facility 30 is input and accepted from the input device, making it possible to set the berthing point with higher accuracy, and to set the midpoint P2 for generating the straight-line path T1 with the berthing point P0.

The berthing route generation system 1 in the above-described embodiment starts the berthing direction when the predetermined condition is satisfied in the berthing control, and sets the station-keeping point as the start point.

According to this configuration, for example, in a case where the candidate of the berthing facility 30 is found in the vicinity of the point registered in advance, it is possible to start the berthing direction, and to set the station-keeping point as the start point.

The berthing route generation system 1 in the above-described embodiment detects the berthing facility 30 using the LiDARs 41 to set the berthing point P0. In a case where the route T that connects the berthing point P0, the midpoint P2, and the start point P1 can be generated, the berthing facility 30 is determined as the candidate berth, and the candidate berth is displayed.

According to this configuration, it is possible to reduce a problem that the route generation is not possible after candidate selection, by searching for a candidate with the same logic as berthing route generation in proposing the candidate berth of the berthing facility 30.

The configuration in the above-described embodiment is an example of the present invention, and various alterations such as substitutions of the components of the embodiment with known components can be made without departing from the spirit and scope of the present invention.

In the above-described embodiment, while in a case where the predicted route of the ship 20 centering on the route T interferes with an obstacle, control of resetting the first midpoint P2 as the second midpoint P3 and generating the route T is performed, the present invention is not limited thereto, and the operation flow of resetting the second midpoint P3 may be omitted. Further, while the second midpoint P3 is reset at the position having the same bearing as the first midpoint P2 and closer to the berthing point P0 than the first midpoint P2, the present invention is not limited thereto. In addition, the present invention is not limited to a configuration in which the second midpoint P3 is the point that is maintained at the distance from the berthing point P0 and is offset from the first midpoint P2.

In the present embodiment, while a configuration is made in which, when the predetermined condition is satisfied, the display of route generation not being possible is performed, the present invention is not limited to the configuration in which the display of route generation not being possible is performed.

In the present embodiment, while a configuration in which the direction in which the berthing surface 30a of the berthing facility 30 is recognized on the basis of the detection result of the LiDARs 41, and the direction substantially parallel to the berthing surface 30a is determined on the basis of the recognition result of the extension direction in the berthing surface 30a is employed, the present invention is not limited thereto, and the extension direction of the berthing surface 30a may be recognized using other recognition methods.

In addition, the present invention is not limited to a configuration in which the input of the user regarding the berthing direction is received from the input device 50, and the midpoint P2 is set on the basis of the input berthing direction.

The present invention is not limited to a configuration in which, when a predetermined condition is satisfied in berthing control, berthing direction starts, and a station-keeping point is set as a start point.

The ship steering control unit 50 of the above-described embodiment may have a configuration including a program that performs processing (operation flow) by the berthing route generation system 1.

It is preferable that the berthing route generation system 1 is mounted in the ship 20.

The berthing route generation system 1 of the present embodiment may compose a part of an automatic navigation system for ship that performs automatic navigation.

### EXPLANATION OF REFERENCES

1 Berthing route generation system
20 Ship
30 Berthing facility
30a Berthing surface
40A Sensor system
41 LiDAR (external recognition sensor)
43 Camera
50 Ship steering control unit (input device)
P0 Berthing point
P1 Start point
P2 First midpoint (midpoint)
P2' Leeward midpoint (first midpoint, midpoint)
P3 Second midpoint
T Route
T1 Straight-line path
X1 Fore-aft direction
X2 Right-left direction

## Claims

1. A berthing route generation system that generates a route (T) for making a ship (20) dock at a berthing facility (30),
wherein the berthing route generation system generates the route (T) that
has a berthing point (P0), which is set near the berthing facility (30) and includes a target position and a target bearing,
a start point (P1) where a berthing operation starts, and
a midpoint (P2), which includes the target position and the substantially same target bearing as the berthing point (P0), and
connects the start point (P1), the midpoint (P2), and the berthing point (P0),
the midpoint (P2) is a position that is offset from the berthing point (P0) at a predetermined distance in a direction substantially parallel to a berthing surface (30a) of the berthing facility (30), and
the berthing route generation system generates a straight-line path (T1) that linearly connects the berthing point (P0) and the midpoint (P2).

2. The berthing route generation system according to claim 1,
wherein a fore-aft direction of the ship (20) when the ship (20) is berthed at the berthing point (P0) and the berthing surface (30a) are substantially parallel to each other.

3. The berthing route generation system according to claim 1 or 2,
wherein, in a case where a predicted locus of the ship (20) centering on the route (T) interferes with an obstacle, the midpoint (P2) is reset as a second midpoint (P3) to generate the route (T).

4. The berthing route generation system according to claim 3,
wherein the second midpoint (P3) is set at a position that has the same bearing as the midpoint (P2) and is closer to the berthing point (P0) than the midpoint (P2).

5. The berthing route generation system according to claim 3 or 4,
wherein the second midpoint (P3) is a point that is maintained at a distance from the berthing point (P0) and is offset from the midpoint (P2).

6. The berthing route generation system according to any one of claims 3 to 5,
wherein, when a predetermined condition is satisfied, display of route generation not being possible is performed.

7. The berthing route generation system according to any one of claims 1 to 6,
wherein the ship (20) includes an external recognition sensor (41) configured to recognize an external world,
a direction in which the berthing surface (30a) of the berthing facility (30) extends is recognized on the basis of a detection result of the external recognition sensor (41), and
a direction substantially parallel to the berthing surface (30a) is determined on the basis of a recognition result of the extension direction in the berthing surface (30a).

8. The berthing route generation system according to any one of claims 1 to 7,
wherein an input of a user regarding a berthing direction is received from an input device (50), and the midpoint (P2) is set on the basis of the input berthing direction.

9. The berthing route generation system according to any one of claims 1 to 8,
wherein berthing direction starts when a predetermined condition is satisfied in berthing control and a station-keeping point is set as a start point.

10. The berthing route generation system according to claim 7, or according to claim 8 or 9 in combination with claim 7,
wherein the berthing facility (30) is detected using the external recognition sensor (41) to set the berthing point (P0) and is determined as a candidate berth when the route (T) that connects the berthing point (P0), the midpoint (P2), and the start point (P1) is able to be generated, and the candidate berth is displayed.
